Europäisches Patentamt

European Patent Office

Office européen des brevets

(11) Publication number:

# 0 051 089
## B1

(12) **EUROPEAN PATENT SPECIFICATION**

(45) Date of publication of patent specification: 07.01.87

(51) Int. Cl.⁴: **G 06 F 15/20**

(21) Application number: 80201047.0

(22) Date of filing: 04.11.80

(54) Method for the analysis of scanned data.

(43) Date of publication of application:
12.05.82 Bulletin 82/19

(45) Publication of the grant of the patent:
07.01.87 Bulletin 87/02

(84) Designated Contracting States:
DE FR GB IT NL SE

(56) References cited:
EP-A-0 009 345
WO-A-80/01963
US-A-3 801 741

IBM TECHNICAL DISCLOSURE BULLETIN, vol.
14, no. 12, May 1972, pages 3621-3622, New
York, USA, S.H. CAMPBELL et al.: "Noncontact
test system"

Belzer, Holzman, Kent: Encyclopedia of
Computer Science and Technology, vol. 12,
1979, pages 90-94, 103-108

Belzer, Holzman, Kent: "Encyclopedia of
Computer Science and Technology, vol. 5,
1976, pp. 458-466

(73) Proprietor: **The Boeing Company**
P.O. Box 3707
Seattle Washington 98124 (US)

(72) Inventor: **Weidman, Peter Charles**
7057 34th Ave. N.E.
Seattle Washington 98115 (US)
Inventor: **Woodmansee, Wayne Earl**
9024 40th Ave. S.W.
Seattle Washington 98136 (US)

(74) Representative: **Hoijtink, Reinoud**
**OCTROOIBUREAU ARNOLD & SIEDSMA**
**Sweelinckplein 1**
**NL-2517 GK Den Haag (NL)**

Courier Press, Leamington Spa, England.

## Description

The present invention pertains to the data processing art and, more particularly, to a method for the selective analysis of scanned data.

From US—A—3 801 741 a method is known as described in the precharacterizing part of the claim. In many applications, it is desirable to be able to select any given area of the scan for statistical analysis of the data points contained therein.

It is an object of the invention to provide a method for the display and selective statistical analysis of data points contained within a defined area of a display with any polygonal boundary. This is according to the invention achieved by the steps as defined in the characterizing part of the claim.

The method for the display and selective statistical analysis of a series of data points, wherein each data point is represented by unique position signals X and Y and a magnitude or brightness at that position represented by a signal Z, includes the first step of storing each data point X, Y and Z signal in an array. The stored data points are plotted on a graphic display such that the magnitude or brightness of the display of each data point corresponds to the Z signal and the relative position of the display of each data point corresponds to the signals X and Y. Thus, a user controlled boundary on the display is generated. Those data points contained within the selected boundary are selected, with a statistical analysis being performed thereon.

It is remarked that from "Belzer, Holzman, Kent, Encyclopedia of Computer Science and Technology, vol. 12, 1979, pages 90—94, 103—108, Vol. 5, 1976, pages 457—466, a three-dimensional processing of data is known. Output signals which are picture processed indicate the location in XY co-ordinates and a structural parameter (2).

Figure 1 is an overall block diagram of the preferred embodiment of the nondestructive testing system according to the invention;

Figure 2 is representative of a sample display provided by the apparatus of Figure 1;

Figures 3A and 3B are flow diagrams illustrating the logic operations performed by the computer of Figure 1; and

Figure 4 is a graph illustrating pictorially the operations performed by the computer shown in Figure 1.

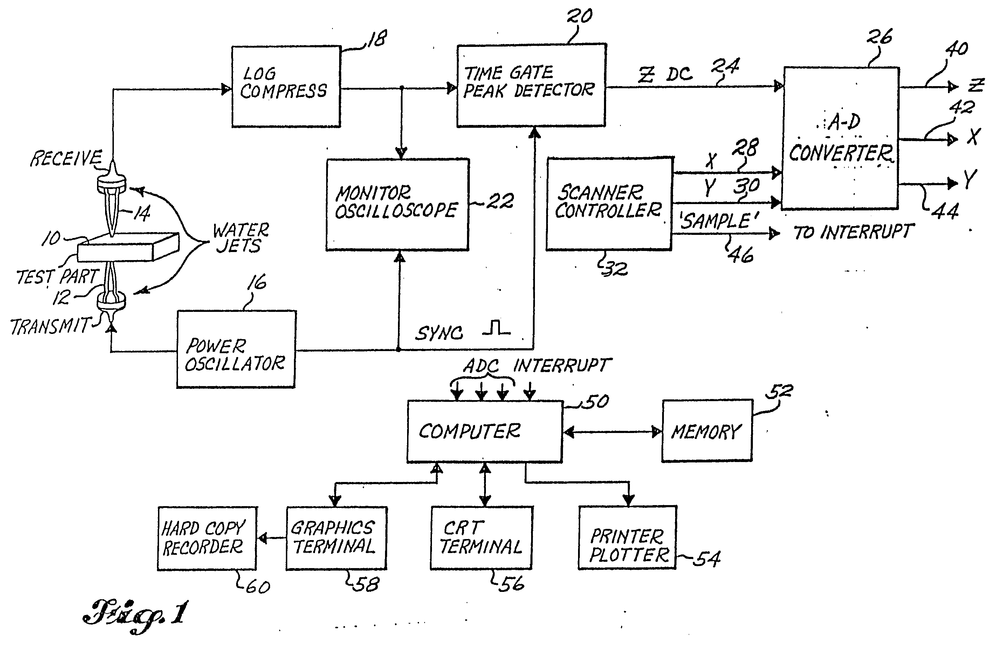

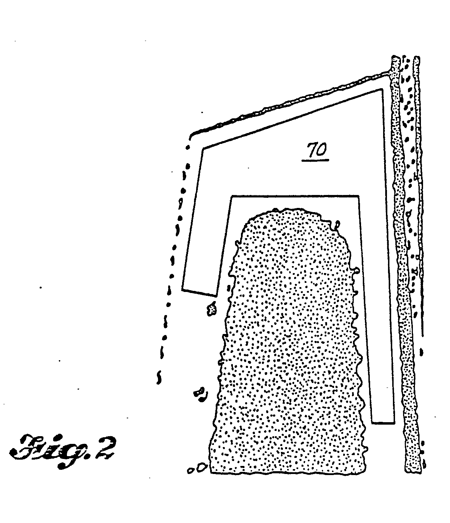

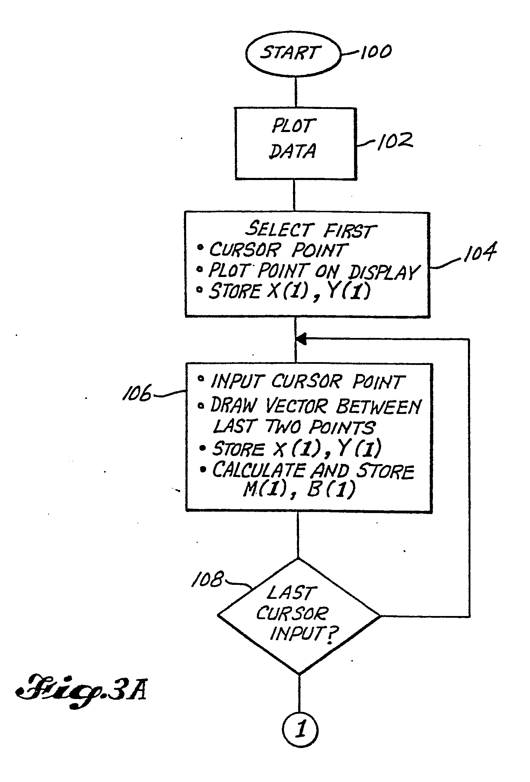

Figure 1 is a block diagram of an ultrasonic through transmission material testing system. Here, a portion of the material under test 10 is located between a transmit transducer 12 and a receive transducer 14. Water columns on both sides of the material 10 couple ultrasonic bursts, generated by power oscillator 16, therethrough. The amplitude of the pressure pulse transmitted through the material 10 is monitored by the receive transducer 14 and converted to corresponding analog electrical signals. Means, not shown, causes the transmit 12 and receive 14 transducers to scan the material in unison. Such ultrasonic, scanning transducers are readily commercially available.

The analog signals from the receive transducer 14 are compressed in the log compressor 18, thereby reducing the overall dynamic range of the detected signals for easier signal processing, and applied to the input of a time gate peak detector 20. The power oscillator 16 provides a synchronization, or "sync" signal at an output which is applied to the time gate peak detector 20. The function of time gate peak detector 20 is to output the signal supplied by the log compressor 18 after a selectable delay following the sync pulse to enable the ultrasonic pulse to travel through the test object and coupling media. Thus, the output of time gate peak detector 20 is the precise through transmission response of the material corresponding to the maximum received signal detected within the gated interval.

A monitor oscilloscope 22, which is triggered by the power oscillator sync pulse, monitors the output of log compression amplifier 18 to display to the operator the instantaneous response of the system.

The DC analog output from time gate peak detector 20 is applied on a first line 24 to an input of an analog to digital converter 26. Also applied to input lines 28—30 of analog to digital converter 26 are the position outputs from a scanner controller 32. Scanner controller 32 includes the apparatus which controls and drives the scanning of the transmit and receive transducers 12, 14. The instantaneous position of the transducers is represented by an analog X coordinate signal on line 28 and an analog Y coordinate signal on line 30. Analog to digital converter 26 operates in the conventional manner to convert the signals on its input lines 24, 28 and 30 to corresponding digital signals at its output lines 40, 42 and 44, respectively. A digital signal representative of the DC amplitude on line 24 is designated as a Z coordinate whereas the X and Y inputs on lines 28, 30 retain their identity.

In an alternative arrangement, the X and Y position signals, rather than being derived from digitized analog signals, may be generated from the sampling pulses occurring at regular Y axis increments together with a discrete direction voltage which determines the manner in which data is output to the display. This reduces the data storage requirement.

The scanner controller 32 also provides an output line 46 which is a sample interrupt signal.

The interrupt signal controls the sampling of the test data by the analog to digital converter. As the transducers scan the test object, the scan controller generates interrupt pulses at regular intervals, typically 1 per millimeter, to sample in the Y direction. The X axis increment is typically fixed at either 1.5 mm or 6.0 mm.

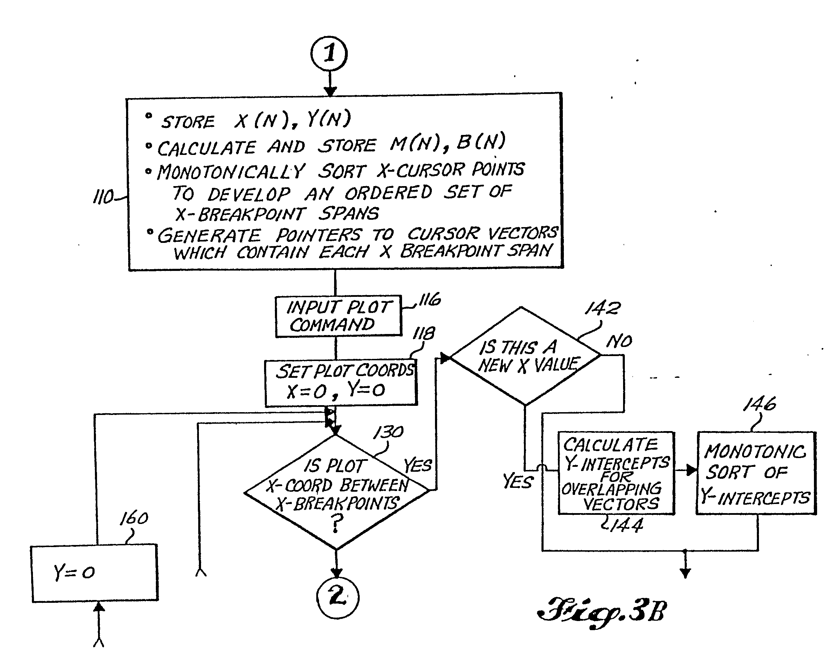

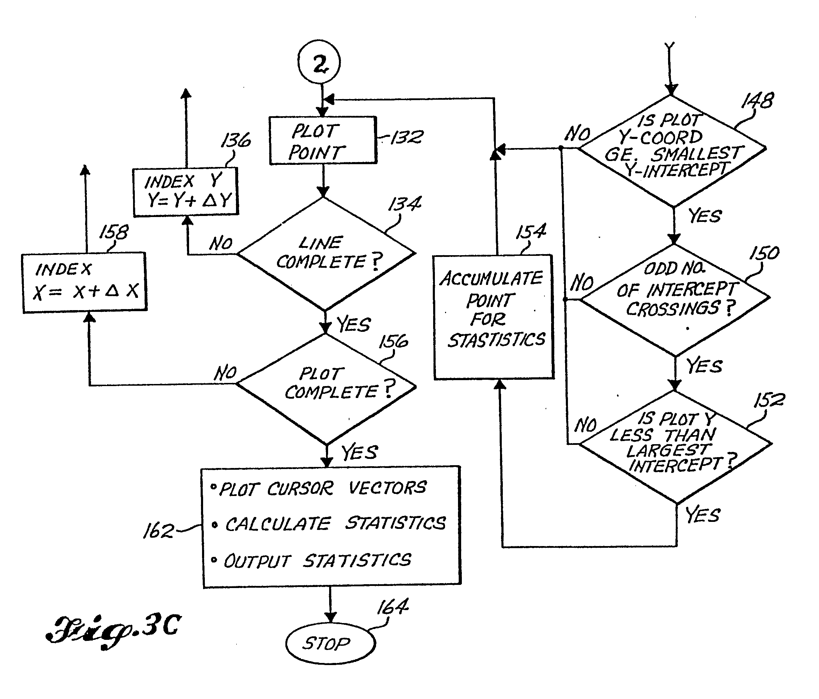

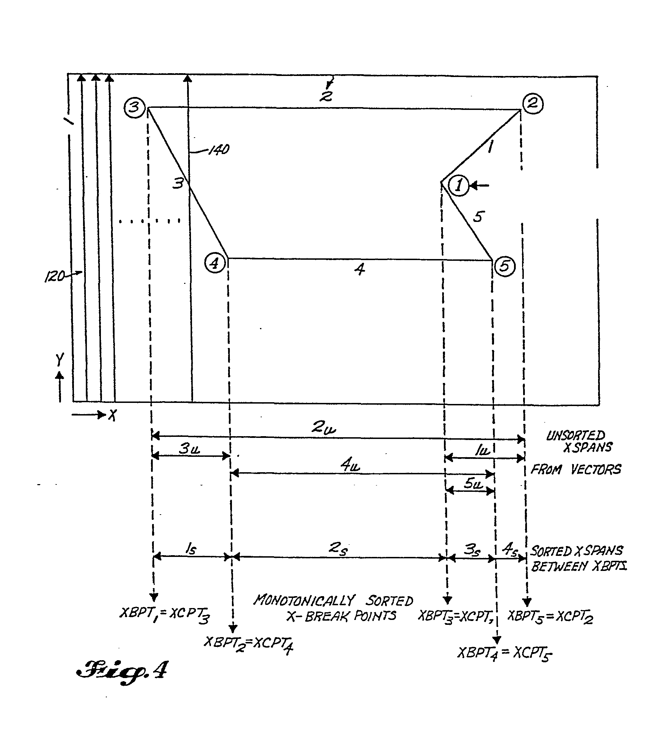

The digital X, Y and Z signals as well as the interrupt signal are fed to the inputs of a computer 50. While the precise operation of the computer 50 is described more fully with respect to figures 3A, 3B and 4, for the purposes of Figure

the computer 50 loads the data points into a memory 52. Memory 52 may be comprised of any conventional memory means such as tape, disc or electronic memory.

Once all of the data points have been loaded into memory 52, the computer 50, responding to its internal programming, outputs the data to a conventional printer plotter 54 and a graphics terminal 58 which in turn drives a hard copy recorder 60.

System control is provided via a standard CRT terminal 56. Figure 2 is representative of a sample display produced by the system of Figure 1. The display is representative of the part under test in that the relative brightness of each data point is representative of the amplitude of the Z signal at the relative position on the sample as determined by the X, Y coordinate signals. Thus, for example, the computer compares the Z level of each data point with a programmable reference level. If the Z level is less than the reference level this may be displayed as either a light or dark area dependent upon programming. Correspondingly, if the Z value is greater than the reference this may be displayed as a dark or light region. By changing the programmable reference level the computer 50 can produce different displays of the material showing its various characteristics. This eliminates the repetitive scans required in the prior art.

Also, an operator, via use of the graphics terminal 58, can define a boundary area, indicated generally at 70 (Fig. 2), from which data points are to be selected for statistical processing. The manner in which this is done is more fully understood with reference to Figures 3A, 3B and 4.

Figures 3A and 3B are flow diagrams illustrating the sequences performed by the computer 50 of Figure 1 to create the data display, allow a user to define any boundary within the display and perform statistical analysis only on data points within that boundary. Figure 4 pictorially depicts the process which the computer performs.

Referring to Figure 3A, the computer begins its operation at the start 100. The X, Y and Z signals corresponding to each data point are recalled from memory 52 (Fig. 1) and plotted on the graphics display, as indicated by block 102. Upon viewing the display, a user may define any shaped boundary for statistical analysis. This begins, as indicated in block 104 by selecting a first cursor point on the boundary. Referring to Figure 4, the first cursor point is indicated by ①. The X, Y coordinates of this point are stored in memory and point ① is plotted on the display. The process continues by selecting the next cursor point, here point ② in Figure 4, as indicated in block 106. A vector is then drawn between points ① and ②. The X and Y coordinates of the next point are stored and the computer calculates the slope, and Y intercept of the vector between points ① and ②.

Block 108 then poses the question as to whether this is the last cursor point. If the answer is no the system returns to inputting the next cursor point, and continues as per block 106. In the example shown in Figure 4, a total of 5 cursor points are utilized. It should be understood, however, that any number of cursor points could be provided.

Once the last cursor point is entered, the computer continues in accordance with the flow diagram of Figure 3B. Here, as indicated by block 110, the last cursor point, i.e. point ⑤ in Figure 4, has its X and Y coordinates stored and a vector is drawn between the last point and the first point ①. The slope and Y intercept M(N), B(N), respectively, are calculated and stored for this vector.

The computer than monotonically sorts the X cursor points to develop an increasing list of sorted X break points. Thus, referring to Figure 4, $X(③)<X(④)<X(①)<X(⑤)<X(②)$.

Next, the vectors are examined to determine the set of their X spans which fully overlap each of the spans of the ordered, or sorted X spans. In the example shown in Figure 4, the X span of the vectors labeled $2_u$ and $3_u$ overlap the sorted X span $1_s$; the vectors labeled $2_u$ and $4_u$ overlap sorted X span $2_s$; the vectors labeled $1_u$, $2_u$, $4_u$ and $5_u$ overlap sorted X span $3_s$; and vectors labeled $1_u$ and $2_u$ overlap sorted X span $4_s$.

Plotting of the stored sample points originated at the lower left corner of the display and takes place from bottom to top, as indicated by blocks 116 and 118 of Figure 3B and the arrows, indicated generally by reference numeral 120 in Figure 4. Following logic flow diagram 3B, at block 130 the X coordinate of the plot is tested for being between successive break points. If it is not, the point is plotted, at block 132, and the test is made at block 134, to determine whether or not the vertical line is complete, i.e. whether or not the Y coordinate of the plot exceeds the highest allowed Y coordinate of the display. If the line is not complete, the system increments the Y value by a value $\triangle Y$, as indicated at block 136. The system then reverts to block 130 to determine whether or not the X coordinate of the plot is between X break points.

This process continues until, as shown at line 140 in Figure 4, the X coordinate of the plot is in fact between X break points. Now, at block 142, a determination is made as to whether the X value is a new X value, i.e. whether the X value has been incremented from its previous value at the time of the test at block 142. If it is, the system increments to block 144 and calculates the Y intercepts of the plot with overlapping vectors between the X break points. At block 146 a monotonic sort is done of the Y intercepts to determine in which order the plot will intercept vectors. Thus, as in Figure 4, the plot line 140 will intercept vector 3 prior to intercepting vector 2.

After completing the monotonic sort of Y intercepts, the system, in block 148, determines whether or not the plotted Y coordinate is greater than or equal to the smallest Y intercept. If no, the system reverts to plot point block 132. If yes, a test is done, at block 150, to determine whether or not the plot has passed an odd number of intercept crossings. If no, the system reverts to plot point block 132 whereas if yes a test is made at block 152, to determine whether or not the plotted Y coordinate is less than the largest Y intercept. If no, the system reverts to plot point block 132 whereas if the plot is less than the largest Y intercept the point is accumulated for statistics at block 154. The system then returns to the plot point block 132.

In this manner, one complete vertical line scan is made. Once the line is complete, as determined by block 134, the system determines whether or not the entire plot is complete at block 156. If it is not, the X value is indexed by value $\triangle$X at block 158 and the Y value is reset to zero at block 160, with the system returning to block 130 for further iterations.

Finally, once block 156 determines that the plot is complete, it causes the display to plot the cursor vectors, calculate the statistics for the points accumulated by block 154, and output the statistics at block 162. The process being complete, the system then stops, as indicated at block 164.

To summarize the basic method by which data points within any desired boundary are selected, cursor points which define the boundary of the desired area are entered by a user. The system then generates a vector between successive cursor points, and calculates the slope and Y intercept of the vector. When all cursor points have been entered, the system sorts the X spans between cursor break points. A determination is made of which unsorted X spans from the generated vectors are associated with the sorted X spans between cursor break points. The plot, beginning at the origin, generates successive vertical lines. Once it is determined that the X coordinate of the plot is between the sorted X span break points, those unsorted vector X spans which overlap the relevant break points are tested for a Y intercept with the plot. In this way, the system knows which of the vectors is crossed first. If the plot is greater than or equal to the smallest of the vector Y intercepts, and if at that point an odd number of intercept crossings has been made and if the plot is less than the largest vector intercept, then conditions are satisfied for the plot being within the defined boundary. Therefore, data points falling on this vertical line and satisfying the above conditions are accumulated for statistics. In this manner, all data points in the scan system within any defined area can be accessed and processed statistically.

### Claim

A method for the display and selective statistical analysis of a series of data points, each data point being represented by unique position signals X and Y and a magnitude at said position represented by a brightness signal Z, including the steps of:

a) storing each data point X, Y and Z signal in an array;

b) plotting said stored data points on a graphic display such that the brightness of the display of each data point corresponds to said signals X and Y;

c) generating a user controlled boundary on said display by means of cursor points to be connected by straight lines;

d) selecting only those data points contained within said selected boundary; and

e) performing a predetermined statistical analysis on only those displayed data points within said boundary,

characterized in that selecting only those data points contained within the selected boundary comprises the steps of:

f) sorting the X coordinates of the cursor points to form a monotonically increasing value list thereof;

g) determining the X span (Fig. 4: $1_u$, $2_u$) of each of the vectors between successive cursor points;

h) determining which of the unsorted vector X spans are associated with successive pairs of the sorted cursor X coordinates;

i) scanning the display by incrementing in values of Y from an origin value to the highest Y value allowed at which time the X value is incremented by a predetermined value X and Y is again incremented from its origin value to its highest allowed value, repeating this process until the entire display has been scanned; and

j) during scanning step i):

I) upon the instantaneous incremented X value exceeding a sorted X coordinate cursor point the vector X spans which overlap the instantaneous incremented X value are tested for Y intercepts and the successive cursor points are sorted according to increasing Y intercept values with said incremented scan,

II) upon the scan incrementing in Y value from its origin value to the first vector intercept, comparing the incremental scanned value with the stored data point value and selecting those data point values equaling the scanned value until the scan increments to the next intercept with a vector;

III) selecting subsequent data points whose coordinates match the instantaneous scan value for scan values which are between odd and even number Y intercepts with the vectors.

**Patentansprüch**

Verfahren zur Sichtwiedergabe und selektiven statistischen Analyse einer Reihe von Datenpunkten, wobei jeder Datenpunkt durch eindeutige Positionssignale X und Y repräsentiert ist, sowie durch eine Größe in dieser Position, welche durch ein Helligkeitssignal Z repräsentiert ist, umfassend die Schritte:

a) Speichern jedes Datenpunktsignals X, Y und Z in einer Anordnung;

b) Aufzeichnen der gespeicherten Datenpunkte auf einer graphischen Sichtwiedergabe derart, daß die Helligkeit der Sichtwiedergabe von jedem Datenpunkt den Signalen X und Y entspricht;

c) Erzeugen einer anwenderkontrollierten Bereichsgrenze auf der Sichtwiedergabe mittels Schreibmarkenpunkten, die durch gerade Linien zu verbinden sind;

d) Auswählen von nur denjenigen Datenpunkten, die innerhalb der gewählten Bereichsgrenze enthalten sind; und

e) Ausführen einer vorbestimmten statistischen Analyse an nur denjenigen in Sichtwiedergabe wiedergegebenen Datenpunkten, die innerhalb der Bereichsgrenze sind,

dadurch gekennzeichnet, daß das Auswählen von nur denjenigen Datenpunkten, die innerhalb der gewählten Bereichsgrenze enthalten sind, die folgenden Schritt umfaßt:

f) Sotrieren der X-Koordinaten der Schreibmarkenpunkte, um eine monoton zunehmende Wertliste derselben zu bilden;

g) Bestimmen der X-Spanne (Figur 4: $1_u$, $2_u$) von jedem der Vektoren zwischen aufeinanderfolgenden Schreibmarkenpunkten;

h) Bestimmen, welche der unsortierten Vektor-X-Spannen aufeinanderfolgenden Paaren von sortierten Schreibmarken-X-Koordinaten zugeordnet sind;

i) Abtasten der Sichtwiedergabe durch Inkrementieren in Werten von Y von einem Ursprungswert bis zu dem höchsten Y-Wert, der zulässig ist, zu welcher Zeit der X-Wert mittels eines vorbestimmten Werts X inkrementiert und Y erneut von seinem Ursprungswert zu seinem höchsten zugelassenen Wert inkrementiert wird, Wiederholen dieses Prozesses, bis die gesamte Sichtwiedergabe abgetastet worden ist; und

j) während des Abtastschritts i):

I) beim Überschreiten eines sortierten X-Koordinatenschreibmarkenpunkts durch den augenblocklichen inkrementierten X-Wert werden die Vektor-X-Spannen, welche den augenblicklichen inkrementierten X-Wert überlappen, auf Y-Abschnitte getestet, und die aufeinanderfolgenden Schreibmarkenpunkte werden entsprechend zunehmenden Y-Abschnittswerten mit der inkrementierten Abtastung sortiert,

II) bei einer Inkrementierung der Abtastung im Y-Wert von dessen Ursprungswert zu dem ersten Vektorabschnitt, Vergleichen des inkrementellen abgetasteten Werts mit dem gespeicherten Datenpunktwert und Auswählen derjenigen Datenpunktwerte, die dem abgetasteten Wert gleich sind, bis die Abtastung zu dem nächsten Abschnitt mit einem Vektor inkrementiert;

III) Auswählen nachfolgender Datenpunkte, deren Koordinaten dem augenblicklichen Abtastwert entsprechen für Abtastwerte, die zwischen ungeradzahligen und geradzahligen Y-Abschnitten mit den Vektoren sind.

## Revendication

Procédé permettant l'affichage et l'analyse statistique sélective d'une série de points de données, chaque point de donnée étant représenté par des signaux X et Y d'une position unique et une amplitude pour ladite position représentée par un signal de brillance Z, comportant les opérations suivantes:

a) emmagasiner le signal X, Y et Z de chaque point de donnée dans un tableau;

b) porter lesdits points de données emmagasinés sur un affichage graphique de façon que la brillance de l'affichage de chaque point de donnée corresponde auxdits signaux X et Y;

c) produire une frontière commandée par l'utilisateur sur l'affichage au moyen de points de curseur devant être raccordés par des lignes droites;

d) sélectionner les seuls points de données qui sont contenus à l'intérieur de ladite frontière sélectionnée; et

e) effectuer une analyse statistique prédéterminée sur les seuls points de donnée affichés se trouvant à l'intérieur de ladite frontière, caractérisé en ce que la sélection des seuls points de données contenus à l'intérieur de la frontière sélectionnée comprend les opérations suivantes:

f) classer les coordonnées X des points de curseur de façon à former une liste de valeurs en croissance monotone de celles-ci;

g) déterminer la composante X (Figure 4: $1_u$, $2_u$) de chacun des vecteurs entre des points de curseur successifs;

h) déterminer lesquelles des composantes X des vecteurs non classées sont associées avec des paires successives de coordonnées X de curseur classées;

i) balayer l'affichage en incrémentant en veleurs de Y, depuis une valeur d'origine jusqu'à la valeur Y la plus élevée qui est autorisée, après quoi on incrémente la valeur X par une valeur X prédéterminée et on incrémente de noveau Y de sa valeur d'origine à sa valeur la plus élevée autorisée, en répétant ce processus jusqu'à ce que tout l'affichage ait été balayé; et

j) pendant l'opération de balayage i):

I) dès que la valeur X incrémentée instantanée dépasse un point de curseur de coordonnées X classées, on vérifie l'existence d'interceptions Y pour les composantes X de vecteurs qui chevauchent la valeur X incrémentée instantanée et on classe les points de curseur successifs en fonction des valeurs d'interceptions Y croissantes avec ledit balayage incrémenté.

II) dès que le balayage incrémente en valeur Y depuis sa valeur d'origine jusqu'à la premier interception de vecteur, on compare la valeur balayée incrémentielle avec la valeur du point de donnée emmagasiné et on choisit les valeurs des points de données qui sont égales à la valeur balayée jusqu'à ce que le balayage

9 0 051 089 10

soit incrémenté à l'interception suivante avec un vecteur;

III) on sélectionne des points de données suivants dont les coordonnées s'accordent avec la valeur de balayage instantanée pour des valeurs de balayage qui se trouvent entre des interceptions Y de nombres impairs et pairs avec les vecteurs.

Fig. 1

_Fig. 2_

70

START —100

PLOT
DATA —102

SELECT FIRST
• CURSOR POINT
• PLOT POINT ON DISPLAY —104
• STORE X(1), Y(1)

106— 
• INPUT CURSOR POINT
• DRAW VECTOR BETWEEN
  LAST TWO POINTS
• STORE X(1), Y(1)
• CALCULATE AND STORE
  M(1), B(1)

108— LAST
CURSOR
INPUT?

*Fig.3A*

1

① 

Box 110:
- STORE X (N), Y(N)
- CALCULATE AND STORE M(N), B(N)
- MONOTONICALLY SORT X-CURSOR POINTS TO DEVELOP AN ORDERED SET OF X-BREAKPOINT SPANS
- GENERATE POINTERS TO CURSOR VECTORS WHICH CONTAIN EACH X BREAKPOINT SPAN

INPUT PLOT COMMAND — 116

SET PLOT COORDS X=O, Y=O — 118

IS PLOT X-COORD BETWEEN X-BREAKPOINTS ? — 130

IS THIS A NEW X VALUE — 142

CALCULATE Y-INTERCEPTS FOR OVERLAPPING VECTORS — 144

MONOTONIC SORT OF Y-INTERCEPTS — 146

Y=O — 160

②

*Fig.3B*

Fig.3C

*Fig. 4*